# EUROPÄISCHE PATENTSCHRIFT

(11) **EP 1 046 677 B1**
(45) Veröffentlichungstag und Bekanntmachung des Hinweises auf die Patenterteilung: **23.07.2003**
(21) Anmeldenummer: 00107861.7
(22) Anmeldetag: 12.04.2000
(51) Int. Cl.: C09B 62/513, D06P 1/384

(54) **Wasserlösliche Disazoverbindungen mit Arylcarbonamid-Diazokomponenten, Verfahren zu ihrer Herstellung und ihre Verwendung**
Water-soluble disazo compounds with arylcarbonamide-containing diazo-components, process for their preparation and their use
Composés disazoiques solubles dans l'eau dérivés de diazos contenant un groupe arylcarbonamide, procédé pour leur préparation et leur utilisation

(30) Priorität: 22.04.1999 DE 19918159
(43) Veröffentlichungstag der Anmeldung: 25.10.2000
(73) Patentinhaber: DyStar Textilfarben GmbH & Co. Deutschland KG, 65926 Frankfurt am Main (DE)
(72) Erfinder: Eichhorn, Joachim, Dr., 65929 Frankfurt am Main (DE)

(56) Entgegenhaltungen:
- EP-A- 0 384 276
- EP-A- 0 385 204
- EP-A- 0 559 617
- EP-B- 0 437 184
- US-A- 5 071 442

## Beschreibung

Die vorliegende Erfindung liegt auf dem technischen Gebiet der faserreaktiven Disazofarbstoffe.
Aus verschiedenen Patentdokumenten sind bereits Disazofarbstoffe mit faserreaktiven Farbstoffeigenschaften bekannt, die beispielsweise Baumwolle in dunkelblauen bis schwarzen Nuancen färben. Dazu gehören auch Farbstoffe, die eine Diazokomponente mit einer Carbonamid-Funktion, entstanden aus einem aromatischen Carbonsäurederivat und einem aliphatischen Amin, enthalten. Beispielsweise seien DE-A 39 05 074, DE-A 39 05 270, EP-A 208 655, EP-A 221 013, EP-A 284 568, EP-A 309 406, EP-A 381 133 und EP-A 559 617 genannt. Die anwendungstechnischen Eigenschaften dieser Farbstoffe, wie z. B. Farbstärke und Aufbauverhalten in Abhängigkeit vom Färbeverfahren sind jedoch teilweise verbesserungsbedürftig.

Es wurde und gefunden, daß Disazo-Reaktivfarbstoffe auf Basis von 1-Amino-8-hydroxy-naphthalin-disulfonsäuren, die mindestens eine Diazokomponente mit einer N-Arylcarbonamid-Funktion, entstanden aus einem aromatischen Carbonsäurederivat und einem aromatischen Amin, enthalten, verbesserte anwendungstechnische Eigenschaften aufweisen.

Die vorliegende Erfindung betrifft somit Reaktivfarbstoffe der allgemeinen Formel I 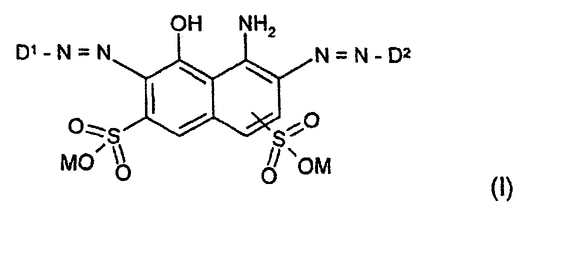 worin
- D¹ und D²: für eine Gruppe der allgemeinen Formel II 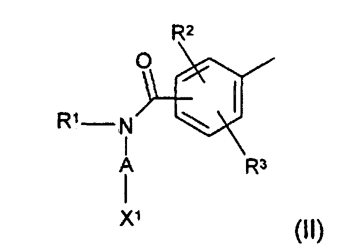 in der
R¹ Wasserstoff, (C₁-C₄)-Alkyl, Aryl oder substituiertes Aryl; und
R² und R³ unabhängig voneinander Wasserstoff, (C₁-C₄)-Alkyl, (C₁-C₄)-Alkoxy, Hydroxy, Sulfo, Carboxy, Amido oder Halogen sind;
A die Bedeutung einer Phenylen-Gruppe der allgemeinen Formel III 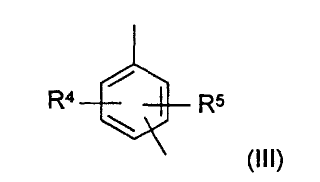 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; einer Naphthylen-Gruppe der allgemeinen Formel IV 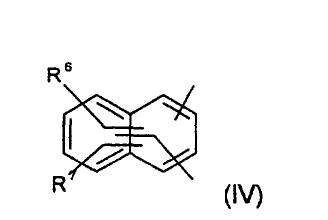 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen sind; oder einer Polymethylengruppe der allgemeinen Formel V

-(CR⁸R⁹)ₖ- (V)

hat, worin
k eine ganze Zahl größer 1; und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder -SO₂-Z steht; oder für einen Phenylrest der allgemeinen Formel VI 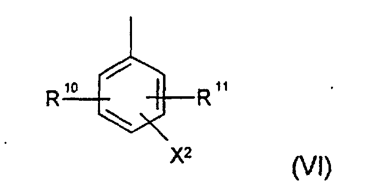 worin
R¹⁰ und R¹¹ unabhängig voneinander Wasserstoff, (C₁-C₄)-Alkyl, (C₁-C₄)-Alkoxy, Hydroxy, Sulfo, Carboxy, Amido oder Halogen sind; und
X² eine der Bedeutungen von X¹ hat; oder
für einen Naphthylrest der allgemeinen Formel VII 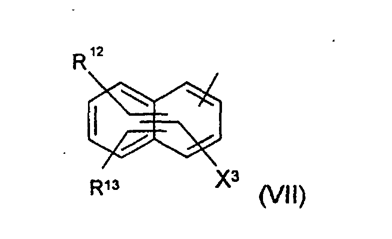 stehen, worin
R¹² und R¹³ unabhängig voneinander Wasserstoff, (C₁-C₄)-Alkyl, (C₁-C₄)-Alkoxy, Hydroxy, Sulfo, Carboxy, Amido oder Halogen sind;
X³ eine der Bedeutungen von X¹ hat;
Z -CH=CH₂, -CH₂CH₂Z¹ oder Hydroxy bedeutet,
worin
Z¹ Hydroxy oder eine unter Alkaliwirkung abspaltbare Gruppe ist; und
M Wasserstoff oder ein Alkalimetall bedeutet;
wobei mindestens einer der Reste D¹ und D² für eine Gruppe der allgemeinen Formel II steht;
wobei im Falle, daß A für eine Gruppe der allgemeinen Formel V steht, R¹ für Aryl oder substituiertes Aryl steht; und
wobei der Reaktivfarbstoff der allgemeinen Formel I mindestens eine Gruppe -SO₂-Z enthält.

In den allgemeinen Formeln können die einzelnen Formelglieder im Rahmen ihrer-Bedeutung voneinander gleiche oder voneinander verschiedene Bedeutungen besitzen.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.
Für Substituenten R stehende Arylgruppen sind insbesondere die Phenylgruppe. Eine für R¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe. Für Substituenten R stehendes Halogen ist insbesondere Fluor, Chlor und Brom, wobei Chlor und Brom bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Z ist bevorzugt Vinyl, β-Chlorethyl und insbesondere bevorzugt β-Sulfatoethyl.

Die Gruppen "Sulfo", "Carboxy", "Thiosulfato", Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel I können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt ß-Sulfatoethylsulfonyl-Gruppen, bedeuten. Enthalten die Farbstoffe der allgemeinen Formel I teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

k bedeutet bevorzugt die Zahl 2 oder 3.

Die Substituenten R¹ bis R¹³ bedeuten bevorzugt Wasserstoff, R⁶, R⁷, R¹² und R¹³ darüberhinaus auch noch Sulfo.

Im Falle, daß A für Phenylen und X¹ für -SO₂Z stehen, steht die SO₂Z-Gruppe bevorzugt in meta- oder para-Stellung zum Stickstoffatom. In der Gruppe der allgemeinen Formel II steht die Carbonamid-Gruppe bevorzugt in para- oder meta-Position zur Diazogruppe. Im Falle, daß A für Naphthylen steht, steht die Bindung, die zum Stickstoffatom führt, bevorzugt in β-Stellung an den Naphthalinkern gebunden. Im Falle, daß D¹ oder D² für eine Gruppe der allgemeinen Formel VII steht, steht die Bindung, die zur Diazogruppe führt bevorzugt in β-Stellung an den Naphthalinkern gebunden.
Im Falle, daß D¹ oder D² für eine Gruppe der allgemeinen Formel VI und X² für -SO₂Z stehen, steht die SO₂Z-Gruppe bevorzugt in meta- oder para-Stellung zur Diazogruppe.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen. Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹ bevorzugt Phenyl und 2-Sulfophenyl bedeutet.

Für D¹ oder D² stehende Gruppen der allgemeinen Formel VI und VII sind beispielsweise 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethylsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfonaphth-2-yl, bevorzugt hiervon 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl und 3- oder 4-Vinylsulfonyl-phenyl.

Bevorzugte erfindungsgemäße Reaktivfarbstoffe haben die allgemeine Formel la 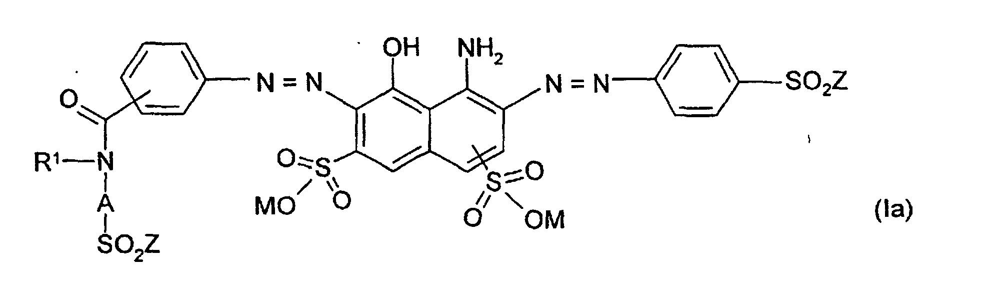 worin R¹, A, und Z wie oben angegeben definiert sind. Besonders bevorzugt steht in der allgemeinen Formel la A für Phenylen und Z für Vinyl oder β-Sulfatoethyl. Ganz besonders bevorzugt steht in der allgemeinen Formel la A für Phenylen, R¹ für Wasserstoff und Z für Vinyl oder β-Sulfatoethyl.

Die Disazofarbstoffe der allgemeinen Formel I lassen sich beispielsweise dadurch herstellen, daß man ein Amin der allgemeinen Formel VIII

D² - NH₂ (VIII)

worin D² wie oben angegeben definiert ist, in üblicher Weise diazotiert, beispielsweise mittels Alkalinitrit bei -5 bis +15°C in stark saurem wäßrigen Medium unterhalb eines pH-Wertes von 1,5, und die erhaltene Diazoniumverbindung anschließend in wässrigem Medium mit 1-Amino-8-hydroxy-3,6-disulfosäure (H-Säure) bzw. 1-Amino-8-hydroxy-4,6-disulfosäure (K-Säure) bei einem pH-Wert von 0 bis 2 und einer Temperatur von 0 bis 10°C zum Monazofarbstoff der allgemeinen Formel IX 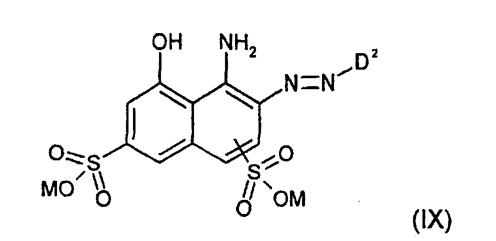 umgesetzt wird, wobei D² und M die oben genannten Bedeutungen besitzen und im Anschluß daran ein Amin der ailgemeinen Formel X

D¹ - NH₂ (X)

worin D¹ wie oben angegeben definiert ist, in der üblichen Weise diazotiert und dann mit dem Monoazofarbstoff der allgemeinen Formel IX bei einem pH-Wert von 4 bis 7,5, bevorzugt bei 5 bis 6, und einer Temperatur von 5 bis 20°C, bevorzugt zwischen 10 und 15°C, zum Disazofarbstoff der allgemeinen Formel I gekuppelt wird.

Die Abscheidung und Isolierung der erfindungsgemäß hergestellten Verbindungen der allgemeinen Formel I aus den Syntheselösungen kann nach allgemein bekannten Methoden erfolgen, so beispielsweise entweder durch Ausfällen aus dem Reaktionsmedium mittels Elektrolyten, wie Natriumchlorid oder Kaliumchlorid, bzw. durch Alkoholzusatz oder durch Eindampfen der Reaktionslösung, beispielsweise Sprühtrocknung, wobei der Reaktionslösung eine Puffersubstanz zugefügt werden kann.

Die Herstellung der Amine der allgemeinen Formeln VIII und X, soweit sie eine Gruppe der allgemeinen Formel II enthalten, kann auf bekannte Weise (z.B. DAS 1 126 547) erfolgen, so durch Kondensation eines hinsichtlich R¹ und A entsprechend substituierten aromatischen primären oder sekundären Amins mit einem hinsichtlich R² und R³ entsprechend substituierten Nitrobenzoylchlorid in wässrigem Medium unter Zusatz einer Base, beispielsweise Natriumcarbonat, bei einem pH-Wert zwischen 7 und 11 und bei Temperaturen von 50 bis 95°C mit anschließender Reduktion der Nitrogruppe zum Amin bei höherer Temperatur, vorzugsweise 60 bis 95°C, unter Verwendung üblicher Reduktionsmittel wie z.B. Natriumhydrogensulfid-Lösung, Eisen in saurer Lösung, bzw. durch katalytische Hydrierung.

Im Falle, daß X¹ für -SO₂Z steht mit Z¹ = Hydroxy kann das zugehörige Amin der allgemeinen Formel XI 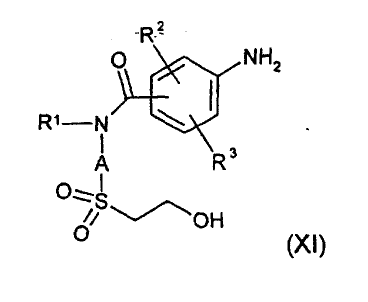 worin R¹ bis R³ und A die oben angeführten Bedeutungen besitzen, in der üblichen Weise, beispielsweise mit Monohydrat, Oleum oder unter Verwendung von Chlorsulfonsäure, verestert und anschließend diazotiert, bzw. mit Nitrosylschwefelsäure bevorzugt bei Temperaturen von 10 bis 30°C gleichzeitig verestert und diazotiert werden.

Die erfindungsgemäßen Farbstoffe der allgemeinen Formel I können als Präparation in fester oder in flüssiger (gelöster) Form vorliegen. In fester Form enthalten sie soweit erforderlich die bei wasserlöslichen und insbesondere faserreaktiven Farbstoffen üblichen Elektrolytsalze, wie Natriumchlorid, Kaliumchlorid und Natriumsulfat. Außerdem können sie desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Trinatriumcitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffe der allgemeinen Formel I als Farbstoffpulver mit einem Gehalt von 30 bis 90 Gew.-%, bezogen auf das Farbstoffpulver bzw. die Präparation, an Farbstoff vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffe der allgemeinen Formel I in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Es können auch die bei der Synthese der Farbstoffe der allgemeinen Formel I anfallende Lösungen, ggf. nach Zusatz einer Puffersubstanz und ggf. nach Konzentrierung, direkt als Flüssigpräparationen der färberischen Verwendung zugeführt werden.

Die erfindungsgemäßen Reaktivfarbstoffe der allgemeinen Formel I haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden.

Gegenstand der vorliegenden Erfindung ist deshalb auch die Verwendung der Reaktivfarbstoffe der allgemeinen Formel I zum Färben oder Bedrucken von hydroxy- und carbonamidgruppenhaltigen Materialien bzw. Verfahren zu deren Anwendung auf diesen Substraten. Eingeschlossen sind hierbei auch die Massefärbung, beispielsweise Folien aus Polyamid, und die Druckfärbung. Bevorzugt kommen die Materialien in Form von Fasermaterialien zur Anwendung, insbesondere als Textilfasermaterialien, wie in Form von Geweben oder als Garne, wie in Form von Strängen und Wickelkörpern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Reaktivfarbstoffe der allgemeinen Formel I lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen z.B. auf Cellulosefasern nach dem Ausziehverfahren aus langer Flotte unter Verwendung von verschiedensten säurebindenden Mitteln und ggf. neutralen Salzen, wie Natriumchlorid oder Natriumsulfat, marineblaue Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln, im wässrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Reaktivfarbstoffe der allgemeinen Formel I beschleunigenden Neutralsalze können dem Bad gewünschtenfalls auch erst nach Erreichen der eigentlichen Färbetemperatur zugesetzt werden. Die Reaktivfarbstoffe der allgemeinen Formel I eignen sich jedoch auch sehr gut für salzioses bzw. salzarmes Färben und können so beispielsweise in niedrigen Farbtiefen ohne jeden Salzzusatz, in mittleren Farbtiefen mit sehr geringem Salzzusatz wie maximal 5g/l Elektrolytsalz und in höheren Farbtiefen mit maximal 10g/l Elektrolytsalz gefärbt werden, wobei in allen Fällen farbstarke Färbungen erhalten werden.

Niedrige Farbtiefen sind im Rahmen dieser Erfindung solche, bei denen nicht mehr als 2 Gewichtsprozent Farbstoff, bezogen auf das Substrat, eingesetzt werden. Unter mittleren Farbtiefen sind mehr als 2 bis maximal 4 Gewichtsprozent Farbstoff und unter höheren Farbtiefen mehr als 4 bis maximal 10 Gewichtsprozent Farbstoff, jeweils bezogen auf das Substrat, zu verstehen.

Somit ist es möglich, sowohl die Abwasserbelastung von Färbereiabwässern als auch die damit verbundenen Kosten, zum Teil deutlich zu reduzieren.

Nach dem Klotzverfahren werden auf Cellulosefasem ebenfalls ausgezeichnete Farbausbeuten mit hohen Fixiergraden und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und den Reaktivfarbstoff der allgemeinen Formel I enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig.

Sowohl in der Färberei als auch in der Druckerei sind die mit den Reaktivfarbstoffen der allgemeinen Formel I erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Reaktivfarbstoffe der allgemeinen Formel I auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der Reaktivfarbstoffe der allgemeinen Formel I mit den säurebindenden Mitteln, gegebenenfalls unter Wärmeeinwirkung, werden diese chemisch an die Cellulosefaser gebunden. Insbesondere die Cellulosefärbungen zeigen nach der üblichen Nachbehandlung durch Spülen zur Entfernung von nicht fixierten Anteilen des Farbstoffs sehr gute Naßechtheiten, zumal sich solche nicht fixierten Anteile wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Reaktivfarbstoffen der allgemeinen Formel I hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, gute Licht- und Naßechtheiten sowie gute Bügel- und Reibechtheiten. Besonders hervorzuheben sind die auf Cellulosefasermaterialien erzielbaren hohen Fixierausbeuten, die über 90% betragen können, sowie der sehr gute Farbaufbau, eingeschlossen das Ausziehverfahren unter Einsatz reduzierter Neutralsalzmengen bzw. vollständiger Verzicht auf Salzzusatz, je nach Farbtiefe, d.h. eingesetzte Farbstoffmenge. Ein weiterer Vorteil der Reaktivfarbstoffe der allgemeinen Formel I besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorgangs bewerkstelligt werden kann.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säure angegeben. Im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (in nm) im sichtbaren Bereich wurden anhand ihrer Alkalimetallsalze in wäßriger Lösung ermittelt.

### Beispiel 1

80 Teile konz. Schwefelsäure werden unter Kühlung bei maximal 10°C mit 7 Teilen Natriumnitrit versetzt, kurz nachgerührt und dann 30 min auf 70°C erwärmt bis das Nitrit gelöst ist. Bei 20°C werden weitere 90 Teile konz. Schwefelsäure sowie 32 Teile 4-Amino-N-(4-((β-hydroxyethyl)sulfonyl)phenyl)benzamid bis zu einer Temperatur von max. 30°C eingetragen und 3 Stunden bei 20-25°C nachgerührt. Die durch gleichzeitige Veresterung und Diazotierung erhaltene Produktsuspension wird abgekühlt und langsam auf Eis gegeben, wobei durch weitere Eiszugabe die Temperatur unter 20°C gehalten und anschließend der Nitritüberschuß mit Amidosulfonsäure zurückgenommen wird. Das Diazoniumsalz wird über eine Nutsche abfiltriert, in 75 Teilen Wasser suspendiert und bei 15-20°C und einem pH-Wert zwischen 4,5 und 5,5 langsam zu einer Lösung von 56 Teilen des auf übliche Weise durch Kupplung von diazotiertem 1-Aminobenzol-4-(β-sulfatoethyl)-sulfon auf 1-Amino-8-naphthol-3,6-disulfonsäure (H-Säure) bei pH 0,7-1,5 hergestellten roten Monoazofarbstoffs in 100 Teilen Wasser gegeben, wobei der angeführte pH-Wert von 4,5 bis 5,5 mittels Natriumcarbonat eingestellt und gehalten wird. Es wird bei ca. 20°C solange nachgerührt bis sich der pH-Wert nicht mehr verändert. Der entstandene marineblaue Bisazofarbstoff der Formel 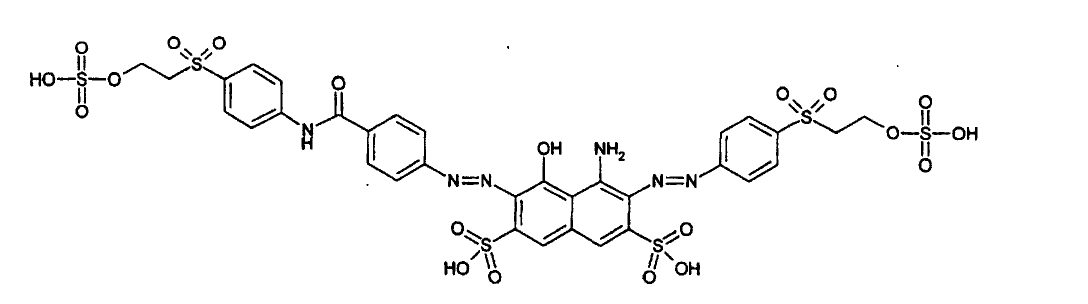 mit einem Absorptionsmaximum von 608 nm, kann auf übliche Weise aus der Reaktionsmischung isoliert werden, z.B. durch Aussalzen mit Kaliumchlorid bzw. Ausfällen durch Ethanol-Zusatz oder Eindampfen der Farbstofflösung im Vakuum bei 50 °C bzw. durch Sprühtrocknung.
Der Farbstoff besitzt sehr gute faserreaktive Farbstoffeigenschaften und liefert nach in der Technik für faserreaktive Farbstoffe üblichen Anwendungsverfahren, einschließlich dem Ausziehverfahren unter salzarmen bzw. salzlosen Färbebedingungen, auf den in der Beschreibung genannten Materialien, Färbungen und Drucke in tiefen marineblauen Tönen mit guten Echtheitseigenschaften.

### Beispiel 2

32 Teile 4-Amino-N-(4-((β-hydroxyethyl)sulfonyl)phenyl)benzamid werden bei einer Temperatur bis zu 30°C in 184 Teile konz. Schwefelsäure eingetragen und 5 Stunden nachgerührt. Die Veresterungssuspension wird langsam auf Eis gegeben, wobei durch weitere Eiszugabe die Temperatur unter 20°C gehalten wird. Das ausgefallene Produkt wird abfiltriert, der feuchte Preßkuchen in 200 Teilen Wasser mit 15,6 Teilen Natriumcarbonat auf pH 6 gestellt und mit 7,6 Teilen Natriumnitrit (in Form einer 5n wässrigen Lösung) versetzt. Die erhaltene Suspension wird langsam zu einer Mischung aus 100 Teilen Eis und 22,1 Teilen konz. Schwefelsäure getropft und 1 Stunde bei einer Temperatur von 5-10°C nachgerührt. Anschließend wird der Nitritüberschuß mit einer 1n wässrigen Amidosulfonsäurelösung zersetzt und die Diazoniumsalzsuspension auf die in Beispiel 1 beschriebene Weise durch Kupplung auf den angegebenen roten Monoazofarbstoff 2-(4-(β-Sulfatoethylsulfonyl)-phenyl)-azo-3,6-disulfo-1-amino-8-hydroxy-naphthalin zum marineblauen Bisazofarbstoff umgesetzt, der wie in Beispiel 1 angegeben isoliert werden kann und die gleichen guten Farbstoffeigenschaften wie die erfindungsgemäße Disazoverbindung des Beispiels 1 besitzt.

### Beispiel 3

32 Teile 4-Amino-N-(3-((β-hydroxyethyl)sulfonyl)phenyl)benzamid werden bei einer Temperatur zwischen 20 und 30°C in 202 Teile konz. Schwefelsäure eingetragen und 3 Stunden bei Raumtemperatur nachgerührt. Das Veresterungsgemisch wird auf 0 bis 10°C abgekühlt und langsam zu einer Mischung aus 50 Teilen Eis und 50 Teilen Wasser gegeben, wobei durch weitere Zugabe von 250 Teilen Eis die Temperatur unter 15°C gehalten wird. Der ausgefallene Aminosulfon-Ester wird nach 30-minütigem Nachrühren abfiltriert und mit 50 Teilen Eiswasser gewaschen. Der feuchte Preßkuchen wird in 200 Teilen Wasser unter Zusatz von 100 Teilen Eis suspendiert und mit 7,6 Teilen Natriumnitrit (in Form einer 5n wässrigen Lösung) bei einem pH-Wert kleiner 1,5 und einer Temperatur von 5 bis 10°C innerhalb 2 Stunden diazotiert. Anschließend wird der Nitritüberschuß mit einer 1n wässrigen Amidosulfonsäurelösung zersetzt und das Diazoniumsalz zu in 100 Teilen Wasser gelösten 58 Teilen des in üblicher Weise hergestellten roten Monoazofarbstoffs 2-(4-(β-Sulfatoethylsulfonyl)-phenyl)-azo-3,6-disuifo-1-amino-8-hydroxy-naphthalin gegeben und bei einem pH-Wert von 4,5 bis 5,5 und einer Temperatur von 10 bis 20°C zum Bisazofarbstoff gekuppelt. Der angegebene pH-Bereich wird dabei durch Zusatz von festem Natriumcarbonat eingestellt und gehalten. Der entstandene marineblaue Bisazofarbstoff der Formel 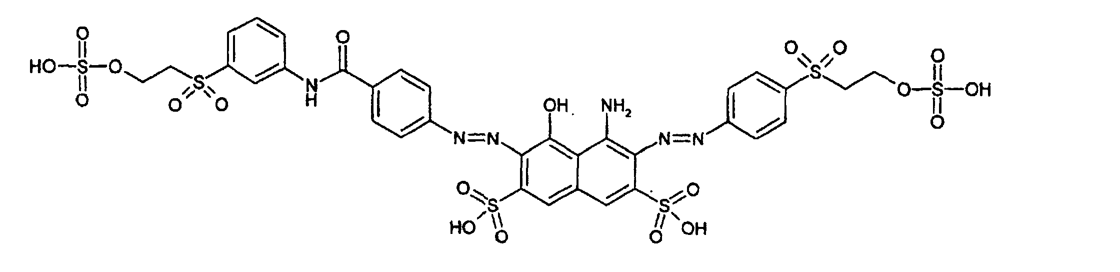 mit einem Absorptionsmaximum von 609 nm, kann auf übliche Weise aus der Reaktionsmischung isoliert werden, z.B. durch Aussalzen mit Kaliumchlorid oder Eindampfen der Farbstofflösung im Vakuum bei 50 °C.

### Beispiel 4

32 Teile 4-Amino-N-(3-((β-hydroxyethyl)sulfonyl)phenyl)benzamid werden wie in Beispiel 3 beschrieben mit 202 Teilen konz. Schwefelsäure verestert und isoliert. Der feuchte Preßkuchen wird in 100 Teile Wasser eingetragen, mit 7,8 Teilen Natriumcarbonat auf pH 6 gestellt, kurz nachgerührt und mit 7,6 Teilen Natriumnitrit (in Form einer 5n wässrigen Lösung) versetzt. Die erhaltene Suspension wird langsam zu einer Mischung aus 100 Teilen Eis und 18,4 Teilen konz. Schwefelsäure getropft und 2 Stunden bei einer Temperatur von 5-10°C nachgerührt. Anschließend wird der Nitritüberschuß mit einer 1n wässrigen Amidosulfonsäurelösung zersetzt und die Diazoniumsalzsuspension auf die in Beispiel 3 beschriebene Weise durch Kupplung auf den angegebenen roten Monoazofarbstoff 2-(4-(β-Sulfatoethylsulfonyl)-phenyl)-azo-3,6-disulfo-1-amino-8-hydroxy-naphthalin zum marineblauen Bisazofarbstoff umgesetzt, der wie in Beispiel 3 angegeben isoliert werden kann.

### Beispiel 5

32 Teile 3-Amino-N-(4-((β-hydroxyethyl)sulfonyl)phenyl)benzamid werden bei einer Temperatur zwischen 20 und 30°C in 202 Teile konz. Schwefelsäure eingetragen und 3 Stunden bei Raumtemperatur nachgerührt. Das Veresterungsgemisch wird auf 0 bis 10°C abgekühlt und langsam auf 85 Teile Eis gegeben, wobei durch weiteren Zusatz von 250 Teilen Eis die Temperatur unter 20°C gehalten wird. Der ausgefallene Aminosulfon-Ester wird nach kurzem Nachrühren abfiltriert und in 165 Teile Wasser eingetragen, mit 40 Teilen Natriumcarbonat auf pH 5 gestellt und mit 8 Teilen Natriumnitrit (in Form einer 5n wässrigen Lösung) versetzt. Die erhaltene Suspension wird langsam zu einer Mischung aus 85 Teilen Eis und 42 Teilen konz. Schwefelsäure getropft und 1,5 Stunden bei einer Temperatur von 5-10°C nachgerührt. Anschließend wird der Nitritüberschuß mit einer 1n wässrigen Amidosulfonsäurelösung zersetzt und die Diazoniumsalzsuspension bei 10-20°C und einem pH-Wert zwischen 4,5 und 5,5 langsam zu einer Lösung von 56 Teilen des auf übliche Weise durch Kupplung von diazotiertem 1-Aminobenzol-4-(β-sulfatoethyl)-sulfon auf 1-Amino-8-naphthol-3,6-disulfonsäure (H-Säure) bei pH 0,7-1,5 hergestellten roten Monoazofarbstoffs in 165 Teilen.Wasser gegeben, wobei der angeführte pH-Wert von 4,5 bis 5,5 mittels Natriumcarbonat eingestellt und gehalten wird. Es wird bei ca. 20°C solange nachgerührt bis sich der pH-Wert nicht mehr verändert. Der entstandene marineblaue Bisazofarbstoff der Formel 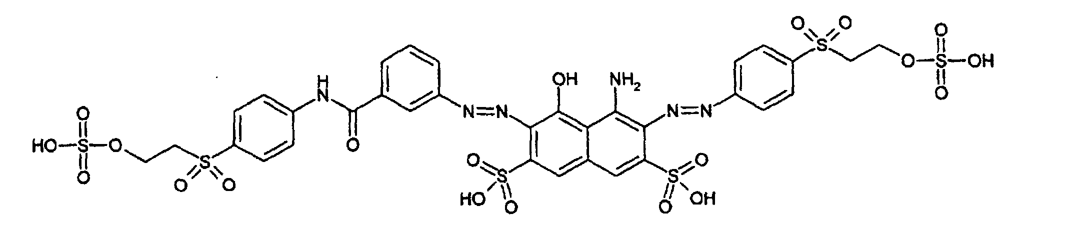 mit einem Absorptionsmaximum von 604 nm kann auf übliche Weise aus der Reaktionsmischung isoliert werden, z.B. durch Aussalzen mit Kaliumchlorid bzw. Ausfällen durch Ethanol-Zusatz oder Eindampfen der Farbstofflösung im Vakuum bei 50 °C bzw. durch Sprühtrocknung.

### Beispiel 6

80 Teile konz. Schwefelsäure werden unter Kühlung bei maximal 10°C mit 7 Teilen Natriumnitrit versetzt, kurz nachgerührt und dann 30 min auf 70°C erwärmt bis das Nitrit gelöst ist. Bei 20°C werden weitere 90 Teile konz. Schwefelsäure sowie 35 Teile 4-Amino-N-(2-((β-hydroxyethyl)sulfonyl)ethyl)-N-phenyl-benzamid bis zu einer Temperatur von max. 30°C eingetragen und 2 Stunden bei 20-25°C nachgerührt. Die durch gleichzeitige Veresterung und Diazotierung erhaltene Produktsuspension wird abgekühlt, langsam auf 50 Teile Eis gegeben, dabei durch weitere Zugabe von 200 Teilen Eis die Temperatur unter 20°C gehalten und anschließend der Nitritüberschuß mit Amidosulfonsäure zurückgenommen. Die so erhaltene Suspension wird bei 15-20°C und einem pH-Wert zwischen 4,5 und 5,5 langsam zu einer Lösung von 55 Teilen des auf übliche Weise durch Kupplung von diazotiertem 1-Aminobenzol-4-(β-sulfatoethyl)-sulfon auf 1-Amino-8-naphthol-3,6-disulfonsäure (H-Säure) bei pH 0,7-1,5 hergestellten roten Monoazofarbstoffs in 100 Teilen Wasser gegeben, wobei der angeführte pH-Wert von 4,5 bis 5,5 mittels insgesamt 174 Teilen Natriumcarbonat eingestellt und gehalten wird. Es wird bei ca. 20°C solange nachgerührt bis sich der pH-Wert nicht mehr verändert. Das aus der Farbstofflösung ausgefallene Natriumsulfat wird abfiltriert, ggf. weiteres Natriumsulfat ausgefroren und abfiltriert, und der entstandene marineblaue Bisazofarbstoff der Formel 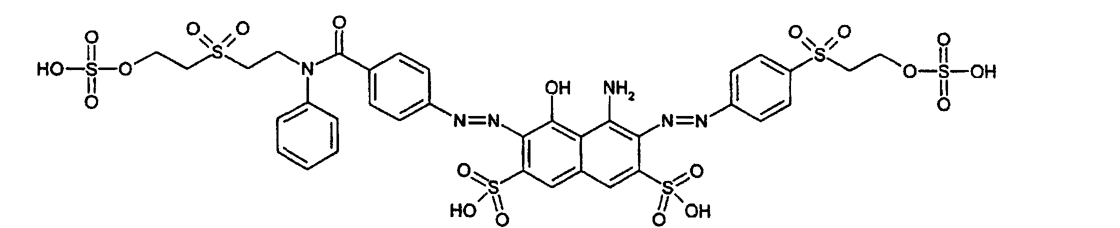 mit einem Absorptionsmaximum von 612 nm auf übliche Weise aus der Reaktionsmischung isoliert, z.B. durch Eindampfen der Farbstofflösung im Vakuum bei 50 °C bzw. durch Sprühtrocknung.

### Beispiel 7

32 Teile 4-Amino-N-(3-((β-hydroxyethyl)sulfonyl)phenyl)benzamid werden wie in Beispiel 3 beschrieben mit 202 Teilen konz. Schwefelsäure verestert und isoliert. Der feuchte Preβkuchen wird in 200 Teile Wasser eingetragen und mit 7,6 Teilen Natriumnitrit (in Form einer 5n wässrigen Lösung) versetzt. Die erhaltene Suspension wird langsam zu einer Mischung aus 100 Teilen Eis und 11,6 Teilen 31 %-iger Salzsäure getropft und 2 Stunden bei einer Temperatur von 5-10°C nachgerührt. Anschließend wird der Nitritüberschuß mit einer 1n wässrigen Amidosulfonsäurelösung zersetzt und zur Diazoniumsalzsuspension 31 Teile 1-Amino-8-hydroxy-naphthalin-3,6-disulfonsäure (H-Säure) innerhalb 10 Minuten zugegeben. Mit insgesamt 1,6 Teilen Natriumhydrogencarbonat wird ein pH-Wert zwischen 0,7 und 1,5 eingestellt und gehalten und über Nacht bei einer Temperatur zwischen 10 und 20°C nachgerührt. Zur so erhaltenen roten Monoazoverbindung tropft man anschließend bei einem pH-Wert zwischen 4,5 und 5,5 und einer Temperatur zwischen 10 und 20°C eine Diazoniumsalzsuspension, die aus 28,4 Teilen 1-Aminobenzol-4-(β-sulfatoethyl)-sulfon durch Diazotieren auf bekannte Weise mit Natriumnitrit in saurem wässrigen Medium bei einer Temperatur zwischen 5 und 10°C hergestellt wurde. Der angegebene pH-Bereich wird durch Zugabe von insgesamt 23 Teilen Natriumcarbonat eingestellt und gehalten. Es wird über Nacht nachgerührt und dann der entstandene marineblaue Bisazofarbstoff der Formel 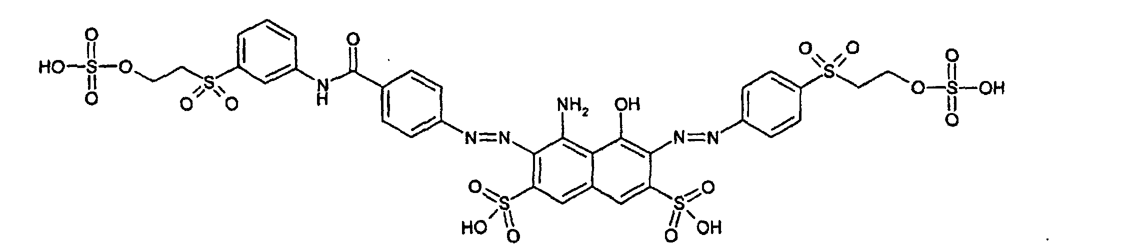 mit einem Absorptionsmaximum von 587 nm auf übliche Weise, z.B. durch Aussalzen mit Kaliumchlorid bzw. Ausfällen durch Ethanol-Zusatz oder Eindampfen der Farbstofflösung im Vakuum bei 50 °C bzw. durch Sprühtrocknung isoliert.

### Beispiele 8 - 25

In den nachfolgenden Tabellenbeispielen werden weitere erfindungsgemäβe Disazoverbindungen entsprechend der allgemeinen Formel Ib 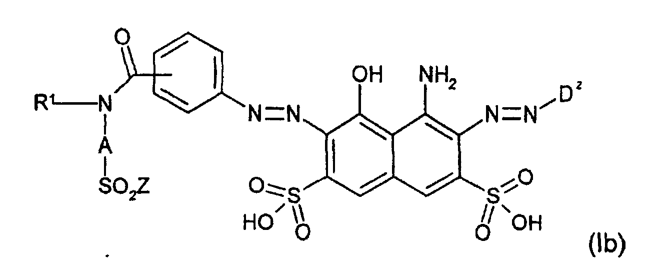 beschrieben. Sie lassen sich in erfindungsgemäßer Weise, beispielsweise analog den obengenannten Beispielen 1 - 6 aus der Diazokomponente D²-NH₂, 1-Amino-8-hydroxy-naphthalin-3,6-disulfonsäure und einem Amin mit entsprechend substituierter Carbonamidfunktion als weitere Diazokomponente, herstellen. Sie besitzen sehr gute faserreaktive Farbstoffeigenschaften und färben die vorstehend genannten Materialien, wie insbesondere Cellulosefasermaterialien, in marineblauen Farbtönen in hoher Farbstärke und guten Echtheiten.

| Beisp. | Carbonamid-position | A | R¹ | Z | D² |
|---|---|---|---|---|---|
| 8 | para | 2-Methoxy-1,5-phenylen | H | 2-Sulfatoethyl | 4-(β-Sulfatoethylsulfonyl)-phenyl |
| 9 | para | 2-Chlor-1,5-phenylen | H | 2-Sulfatoethyl | 4-(β-Sulfatoethylsulfonyl)-phenyl |
| 10 | para | 2,5-Dimethoxy-1,4-phenylen | H | 2-Sulfatoethyl | 4-(β-Sulfatoethylsulfonyl)-phenyl |
| 11 | para | 2-Methoxy-5-methyl-1,4-phenylen | H | 2-Sulfatoethyl | 4-(β-Sulfatoethylsulfonyl)-phenyl |
| 12 | para | 1,3-Phenylen | H | 2-Sulfatoethyl | 2-Sulfo-4-(β-sulfatoethylsulfonyl)-phenyl |
| 13 | para | 1,3-Phenylen | H | 2-Sulfatoethyl | 2-Chlor-5-(β-sulfatoethylsulfonyl)-phenyl |
| 14 | para | 1,3-Phenylen | H | 2-Sulfatoethyl | 2-Methoxy-5-(β-sulfatoethylsulfonyl)-phenyl |
| 15 | para | 1,3-phenylen | H | 2-Sulfatoethyl | 1-Sulfo-6-(β-sulfatoethyl-sulfonyl)-naphth-2-yl |
| 16 | meta | 1,3-phenylen | H | 2-Sulfatoethyl | 4-(β-Sulfatoethylsulfonyl)-phenyl |
| 17 | meta | 2-Methoxy-1,5-phenylen | H | 2-Sulfatoethyl | 4-(β-Sulfatoethylsulfonyl)-phenyl |
| 18 | meta | 1,4-Phenylen | H | 2-Sulfatoethyl | 2-Methoxy-5-(β-sulfätoethylsulfonyl)-phenyl |
| 19 | para | 1-Sulfo-2,6-naphthylen | H | 2-Sulfatoethyl | 4-(β-Sulfatoethylsulfonyl)-phenyl |
| 20 | para | 1,3-Propylen | Phenyl | 2-Sulfatoethyl | 4-(β-Sulfatoethylsulfonyl)-phenyl |
| 21 | meta | 1,2-Ethylen | Phenyl | 2-Sulfatoethyl | 4-(β-Sulfatoethylsulfonyl)-phenyl |
| 22 | para | 1,3-Phenylen | H | 2-Sulfatoethyl | N-(3-((β-sulfatoethyl)sulfonyl)phenyl)benzamid-4-yl |
| 23 | para | 1,2-Ethylen | Phenyl | 2-Sulfatoethyl | N-(3-((β-sulfatoethyl)sulfonyl)phenyl)benzamid-4-yl |
| 24 | para | 1,3-Phenylen | H | 2-Sulfatoethyl | 6-Sulfonaphth-2-yl |
| 25 | para | 1,3-Phenylen | H | Hydroxy | 4-(β-Sulfatoethylsulfonyl)-phenyl |

### Beispiele 26 - 46

In den nachfolgenden Tabellenbeispielen werden weitere erfindungsgemäße Reaktivfarbstoffe entsprechend der allgemeinen Formel Ic 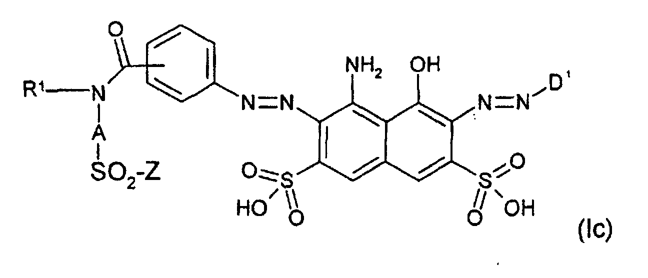 beschrieben. Sie lassen sich in erfindungsgemäßer Weise, beispielsweise analog dem obengenannten Beispiel 7 aus einem Amin mit entsprechend substituierter Carbonamidfunktion als im sauren Medium angekuppelte Diazokomponente, 1-Amino-8-hydroxy-naphthalin-3,6-disulfonsäure und der weiteren Diazokomponente D¹-NH₂, herstellen. Sie besitzen sehr gute faserreaktive Farbstoffeigenschaften und färben die in der Beschreibung genannten Materialien, wie insbesondere Cellulosefasermaterialien, in marineblauen Farbtönen in hoher Farbstärke und guten Echtheiten.

| Beisp. | Carbonamid-position | A | R¹ | Z | D¹ |
|---|---|---|---|---|---|
| 26 | para | 1,4-Phenylen | H | 2-Sulfatoethyl | 4-(β-Sulfatoethylsulfonyl)-phenyl |
| 27 | para | 2-Methoxy-1,5-phenylen | H | 2-Sulfatoethyl | 4-(β-Sulfatoethylsulfonyl)-phenyl |
| 28 | para | 2-Chlor-1,5-phenylen | H | 2-Sulfatoethyl | 4-(β-Sulfatoethylsulfonyl)-phenyl |
| 29 | para | 2,5-Dimethoxy-1,4-phenylen | H | 2-Sulfatoethyl | 4-(β-Sulfatoethylsulfonyl)-phenyl |
| 30 | para | 2-Methoxy-5-methyl-1,4-phenylen | H | 2-Sulfatoethyl | 4-(β-Sulfatoethylsulfonyl)-phenyl |
| 31 | para | 1,3-Phenylen | H | 2-Sulfatoethyl | 2-Sulfo-4-(β-sulfatoethylsulfonyl)-phenyl |
| 32 | para | 1,3-Phenylen | H | 2-Sulfatoethyl | 2-Chlor-5-(β-sulfatoethylsulfonyl)-phenyl |
| 33 | para | 1,3-Phenylen | H | 2-Sulfatoethyl | 2-Methoxy-5-(β-sulfatoethylsulfonyl)-phenyl |
| 34 | para | 1,3-Phenylen | H | 2-Sulfatoethyl | 1-Sulfo-6-(β-sulfatoethylsulfonyl)-naphth-2-yl |
| 35 | meta | 1,4-Phenylen | H | 2-Sulfatoethyl | 4-(β-Sulfatoethylsulfonyl)-phenyl |
| 36 | meta | 1,3-Phenylen | H | 2-Sulfatoethyl | 4-(β-Sulfatoethylsulfonyl)-phenyl |
| 37 | meta | 2-Methoxy-1,5-phenylen | H | 2-Sulfatoethyl | 4-(β-Sulfatoethylsulfonyl)-phenyl |
| 38 | meta | 1,4-phenylen | H | 2-Sulfatoethyl | 2-Methoxy-5-(β-sulfatoethylsulfonyl)-phenyl |
| 39 | para | 1-Sulfo-2,6-naphthylen | H | 2-Sulfatoethyl | 4-(β-Sulfatoethylsulfonyl)-phenyl |
| 40 | para | 1,3-Propylen | Phenyl | 2-Sulfatoethyl | 4-(β-Sulfatoethylsulfonyl)phenyl |
| 41 | para | 1,2-Ethylen | Phenyl | 2-Sulfatoethyl | 4-(β-Sulfatoethylsulfonyl)-phenyl |
| 42 | meta | 1,2-Ethylen | Phenyl | 2-Sulfatoethyl | 4-(β-Sulfatoethylsulfonyl)-phenyl |
| 43 | para | 1,3-Phenylen | H | 2-Sulfatoethyl | N-(3-((β-sulfatoethyl)sulfonyl)-phenyl)benzamid-4-yl |
| 44 | para | 1,2-Ethylen | Phenyl | 2-Sulfatoethyl | N-(3-((β-sulfatoethyl) sulfonyl)phenyl)benzamid-4-yl |
| 45 | para | 1,3-Phenylen | H | 2-Sulfatoethyl | 6-Sulfonaphth-2-yl |
| 46 | para | 1,3-Phenylen | H | Hydroxy | 4-(β-Sulfatoethylsulfonyl)-phenyl |

### Beispiele 47 - 68

In den nachfolgenden Tabellenbeispielen werden weitere erfindungsgemäße Disazoverbindungen entsprechend der allgemeinen Formel Id 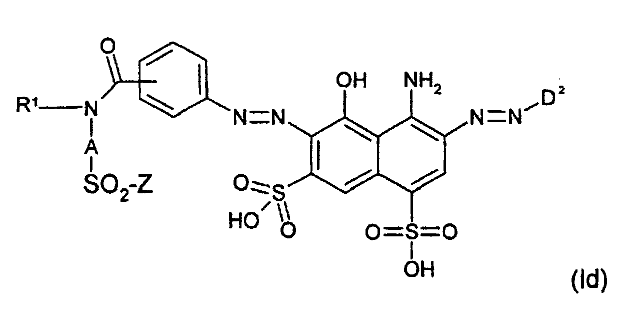 beschrieben. Sie lassen sich in erfindungsgemäßer Weise, beispielsweise analog den obengenannten Beispielen 1 - 6 aus der Diazokomponente D²-NH₂, 1-Amino-8-hydroxy-naphthalin-4,6-disulfonsäure und einem Amin mit entsprechend substituierter Carbonamidfunktion als weiterer Diazokomponente herstellen. Sie besitzen sehr gute faserreaktive Farbstoffeigenschaften und färben die in der Beschreibung genannten Materialien, wie insbesondere Cellulosefasermaterialien, in marineblauen Farbtönen in hoher Farbstärke und guten Echtheiten.

| Beisp. | Carbonamid-position | A | R¹ | Z | D² |
|---|---|---|---|---|---|
| 47 | para | 1,3-Phenylen | H | 2-Sulfatoethyl | 4-(β-Sulfatoethylsulfonyl)-phenyl |
| 48 | para | 1,4-Phenylen | H | 2-Sulfatoethyl | 4-(β-Sulfatoethylsulfonyl)-phenyl |
| 49 | para | 2-Methoxy-1,5-phenylen | H | 2-Sulfatoethyl | 4-(β-Sulfatoethylsulfonyl)-phenyl |
| 50 | para | 2-Chlor-1,5-phenylen | H | 2-Sulfatoethyl | 4-(β-Sulfatoethylsulfonyl)-phenyl |
| 51 | para | 2,5-Dimethoxy-1,4-phenylen | H | 2-Sulfatoethyl | 4-(β-Sulfatoethylsulfonyl)-phenyl |
| 52 | para | 2-Methoxy-5-methyl-1,4-phenylen | H | 2-Sulfatoethyl | 4-(β-Sulfatoethylsulfonyl)-phenyl |
| 53 | para | 1,3-Phenylen | H | 2-Sulfatoethyl | 2-Sulfo-4-(β-sulfatoethylsulfonyl)-phenyl |
| 54 | para | 1,3-Phenylen | H | 2-Sulfatoethyl | 2-Chlor-5-(β-sulfatoethylsulfonyl)-phenyl |
| 55 | para | 1,3-Phenylen | H | 2-Sulfatoethyl | 2-Methoxy-5-(β-sulfatoethylsulfonyl)-phenyl |
| 56 | para | 1,3-Phenylen | H | 2-Sulfatoethyl | 1-Sulfo-6-(β-sulfatoethylsulfonyl)-naphth-2-yl |
| 57 | meta | 1,4-Phenylen | H | 2-Sulfatoethyl | 4-(β-Sulfatoethylsulfonyl)-phenyl |
| 58 | meta | 1,3-Phenylen | H | 2-Sulfatoethyl | 4-(β-Sulfatoethylsulfonyl)-phenyl |
| 59 | meta | 2-Methoxy-1,5-phenylen | H | 2-Sulfatoethyl | 4-(β-Sulfatoethylsulfonyl)-phenyl |
| 60 | meta | 1,4-Phenylen | H | 2-Sulfatoethyl | 2-Methoxy-5-(β-sulfatoethylsulfonyl)-phenyl |
| 61 | para | 1-Sulfo-2,6-naphthylen | H | 2-Sulfatoethyl | 4-(β-Sulfatoethylsulfonyl)-phenyl |
| 62 | para | 1,3-Propylen | Phenyl | 2-Sulfatoethyl | 4-(β-Sulfatoethylsulfonyl)-phenyl |
| 63 | para | 1,2-Ethylen | Phenyl | 2-Sulfatoethyl | 4-(β-Sulfatoethylsulfonyl)-phenyl |
| 64 | meta | 1,2-Ethylen | Phenyl | 2-Sulfatoethyl | 4-(β-Sulfatoethylsulfonyl)-phenyl |
| 65 | para | 1,3-Phenylen | H | 2-Sulfatoethyl | N-(3-((β-sulfatoethyl) sulfonyl)phenyl)-benzamid-4-yl |
| 66 | para | 1,2-Ethylen | Phenyl | 2-Sulfatoethyl | N-(3-((β-sulfatoethyl) sulfonyl)phenyl)-benzamid-4-yl |
| 67 | para | 1,3-Phenylen | H | 2-Sulfatoethyl | 6-Sulfonaphth-2-yl |
| 68 | para | 1,3-Phenylen | H | Hydroxy | 4-(β-Sulfatoethylsulfonyl)-phenyl |

### Beispiele 69 - 90

In den nachfolgenden Tabellenbeispielen werden weitere erfindungsgemäße Disazoverbindungen entsprechend der allgemeinen Formel le 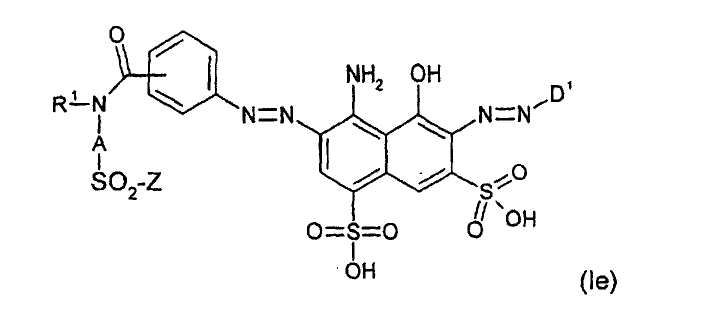 beschrieben. Sie lassen sich in erfmdungsgemäßer Weise, beispielsweise analog dem obengenannten Beispiel 7 aus einem Amin mit entsprechend substituierter Carbonamidfunktion als im sauren Medium angekuppelter Diazokomponente, 1-Amino-8-hydroxy-naphthalin-4,6-disulfonsäure und der weiteren Diazokomponente D¹-NH₂ herstellen. Sie besitzen sehr gute faserreaktive Farbstoffeigenschaften und färben die in der Beschreibung genannten Materialien, wie insbesondere Cellulosefasermaterialien, in marineblauen Farbtönen in hoher Farbstärke und guten Echtheiten.

| Beisp. | Carbonamid-position | A | R¹ | Z | D¹ |
|---|---|---|---|---|---|
| 69 | para | 1,3-Phenylen | H | 2-Sulfatoethyl | 4-(β-Sulfatoethylsulfonyl)-phenyl |
| 70 | para | 1,4-Phenylen | H | 2-Sulfatoethyl | 4-(β-Sulfatoethylsulfonyl)-phenyl |
| 71 | para | 2-Methoxy-1,5-phenylen | H | 2-Sulfatoethyl | 4-(β-Sulfatoethylsulfonyl)-phenyl |
| 72 | para | 2-Chlor-1,5-phenylen | H | 2-Sulfatoethyl | 4-(β-Sulfatoethylsulfonyl)-phenyl |
| 73 | para | 2,5-Dimethoxy-1,4-phenylen | H | 2-Sulfatoethyl | 4-(β-Sulfatoethylsulfonyl)-phenyl |
| 74 | para | 2-Methoxy-5-methyl-1,4-phenylen | H | 2-Sulfatoethyl | 4-(β-Sulfatoethylsulfonyl)-phenyl |
| 75 | para | 1,3-Phenylen | H | 2-Sulfatoethyl | 2-Sulfo-4-(β-sulfatoethylsulfonyl)-phenyl |
| 76 | para | 1,3-Phenylen | H | 2-Sulfatoethyl | 2-Chlor-5-(β-sulfatoethylsulfonyl)-phenyl |
| 77 | para | 1,3-Phenylen | H | 2-Sulfatoethyl | 2-Methoxy-5-(β-sulfatoethylsulfonyl)-phenyl |
| 78 | para | 1,3-Phenylen | H | 2-Sulfatoethyl | 1-Sulfo-6-(β-sulfatoethylsulfonyl)-naphth-2-yl |
| 79 | meta | 1,4-Phenylen | H | 2-Sulfatoethyl | 4-(β-Sulfatoethylsulfonyl)-phenyl |
| 80 | meta | 1,3-Phenylen | H | 2-Sulfatoethyl | 4-(β-Sulfatoethylsulfonyl)-phenyl |
| 81 | meta | 2-Methoxy-1,5-phenylen | H | 2-Sulfatoethyl | 4-(β-Sulfatoethylsulfonyl)-phenyl |
| 82 | meta | 1,4-Phenylen | H | 2-Sulfatoethyl | 2-Methoxy-5-(β-sulfatoethylsulfonyl)-phenyl |
| 83 | para | 1-Sulfo-2,6-naphthylen | H | 2-Sulfatoethyl | 4-(β-Sulfatoethylsulfonyl)-phenyl |
| 84 | para | 1,3-Propylen | Phenyl | 2-Sulfatoethyl | 4-(β-Sulfatoethylsulfonyl)-phenyl |
| 85 | para | 1,2-Ethylen | Phenyl | 2-Sulfatoethyl | 4-(β-Sulfatoethylsulfonyl)-phenyl |
| 86 | meta | 1,2-Ethylen | Phenyl | 2-SulfatoEthyl | 4-(β-Sulfatoethylsulfonyl)-phenyl |
| 87 | para | 1,3-Phenylen | H | 2-Sulfatoethyl | N-(3-((β-sulfatoethyl) sulfonyl)phenyl)-benzamid-4-yl |
| 88 | para | 1,2-Ethylen | Phenyl | 2-Sulfatoethyl | N-(3-((β-sulfatoethyl) sulfonyl)phenyl)-benzamid-4-yl |
| 89 | para | 1,3-Phenylen | H | 2-Sulfatoethyl | 6-Sulfonaphth-2-yl |
| 90 | para | 1,3-Phenylen | H | Hydroxy | 4-(β-Sulfatoethylsulfonyl)-phenyl |

### Anwendungsbeispiel 1

2 Teile des gemäß Beispiel 1 oder 2 erhaltenen Farbstoffs werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-60°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue Färbung mit sehr guten Echtheitseigenschaften.

### Anwendungsbeispiel 2

4 Teile des gemäß Beispiel 1 oder 2 erhaltenen Farbstoffs und 5 Teile Natriumchlorid werden in 999 Teilen Wasser gelöst, 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue Färbung mit sehr guten Echtheitseigenschaften.

### Anwendungsbeispiel 3

8 Teile des gemäß Beispiel 1 oder 2 erhaltenen Farbstoffs und 10 Teile Natriumchlorid werden in 997 Teilen Wasser gelöst, 5 Teile Natriumcarbonat, 1,3 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue Färbung mit sehr guten Echtheitseigenschaften.

## Patentansprüche

1. Reaktivfarbstoff der allgemeinen Formel I 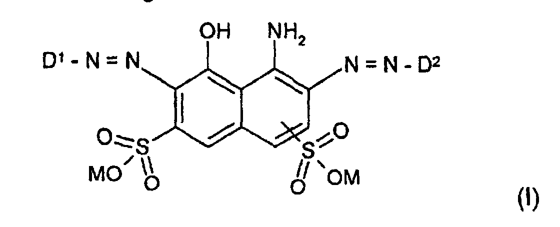 worin
D¹ und D² für eine Gruppe der allgemeinen Formel II 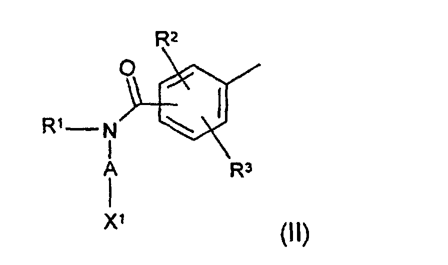
in der
R¹ Wasserstoff, (C₁-C₄)-Alkyl, Aryl oder substituiertes Aryl; und
R² und R³ unabhängig voneinander Wasserstoff, (C₁-C₄)-Alkyl, (C₁-C₄)-Alkoxy, Hydroxy, Sulfo, Carboxy, Amido oder Halogen sind;
A die Bedeutung einer Phenylen-Gruppe der allgemeinen Formel III 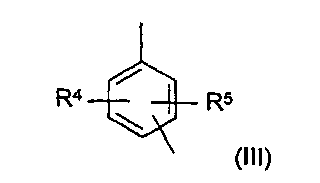
worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; einer Naphthylen-Gruppe der allgemeinen Formel IV 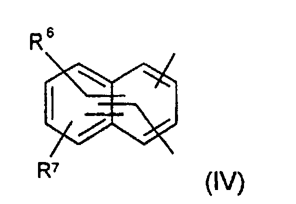
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen sind; oder einer Polymethylengruppe der allgemeinen Formel V
-(CR⁸R⁹)ₖ- (V)
hat, worin
k eine ganze Zahl größer 1; und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder -SO₂-Z steht; oder für einen Phenylrest der allgemeinen Formel VI 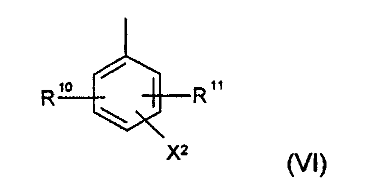
worin
R¹⁰ und R¹¹ unabhängig voneinander Wasserstoff, (C₁-C₄)-Alkyl, (C₁-C₄)-Alkoxy, Hydroxy, Sulfo, Carboxy, Amido oder Halogen sind; und
X² eine der Bedeutungen von X¹ hat; oder für einen Naphthylrest der allgemeinen Formel VII 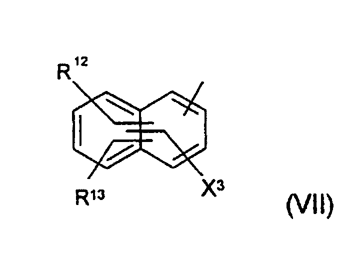
stehen, worin
R¹² und R¹³ unabhängig voneinander Wasserstoff, (C₁-C₄)-Alkyl, (C₁-C₄)-Alkoxy, Hydroxy, Sulfo, Carboxy, Amido oder Halogen sind;
X³ eine der Bedeutungen von X¹ hat;
Z -CH=CH₂, -CH₂CH₂Z¹ oder Hydroxy bedeutet, worin
Z¹ Hydroxy oder eine unter Alkaliwirkung abspaltbare Gruppe ist; und
M Wasserstoff oder ein Alkalimetall bedeutet;
wobei mindestens einer der Reste D¹ und D² für eine Gruppe der allgemeinen Formel II steht;
wobei im Falle, daß A für eine Gruppe der allgemeinen Formel V steht, R¹ für Aryl oder substituiertes Aryl steht; und
wobei der Reaktivfarbstoff der allgemeinen Formel I mindestens eine Gruppe -SO₂-Z enthält.

2. Reaktivfarbstoff gemäß Anspruch 1, **dadurch gekennzeichnet, daß** die Substituenten R¹ bis R⁵ und R⁸ bis R¹¹ Wasserstoff und R⁶, R⁷, R¹² und R¹³ Wasserstoff oder Sulfo bedeuten.

3. Reaktivfarbstoff gemäß Anspruch 1 und/oder 2, **dadurch gekennzeichnet, daß** Z Vinyl, β-Chlorethyl oder β-Sulfatoethyl bedeutet.

4. Reaktivfarbstoff gemäß einem oder mehreren der Ansprüche 1 bis 3, **dadurch gekennzeichnet, daß** er der allgemeinen Formel la 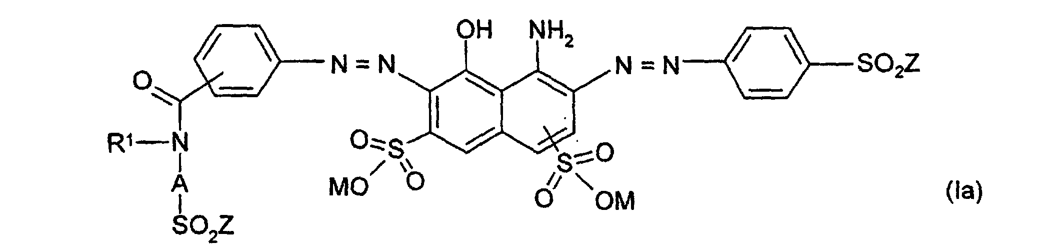 entspricht, worin A, Z und R¹ wie in Anspruch 1 angegeben definiert sind.

5. Reaktivfarbstoff gemäß Anspruch 4, **dadurch gekennzeichnet, daß** A Phenylen und Z Vinyl oder β-Sulfatoethyl bedeuten.

6. Verfahren zur Herstellung eines Reaktivfarbstoffes gemäß einem oder mehreren der Ansprüche 1 bis 5, **dadurch gekennzeichnet, daß** man ein Amin der allgemeinen Formel VIII
D² - NH₂ (VIII)
worin D² wie in Anspruch 1 angegeben definiert ist, in üblicher Weise diazotiert, die erhaltene Diazoniumverbindung anschließend in wässrigem Medium mit 1-Amino-8-hydroxy-3,6-disulfosäure (H-Säure) bzw. 1-Amino-8-hydroxy-4,6-disulfosäure (K-Säure) zum Monazofarbstoff der allgemeinen Formel IX 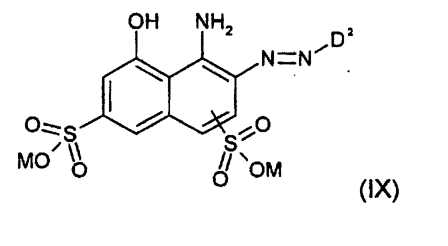 umsetzt und im Anschluß daran ein Amin der allgemeinen Formel X
D¹ - NH₂ (X)
worin D¹ wie in Anspruch 1 angegeben definiert ist, in der üblichen Weise diazotiert und dann mit dem Monoazofarbstoff der allgemeinen Formel IX zum Disazofarbstoff der allgemeinen Formel I kuppelt.

7. Verwendung eines Reaktivfarbstoffes der allgemeinen Formel I gemäß einem oder mehreren der Ansprüche 1 bis 5 zum Färben von hydroxyund/oder carbonamidgruppen-haltigem Fasermaterial.

## Claims

1. A reactive dye of the general formula I 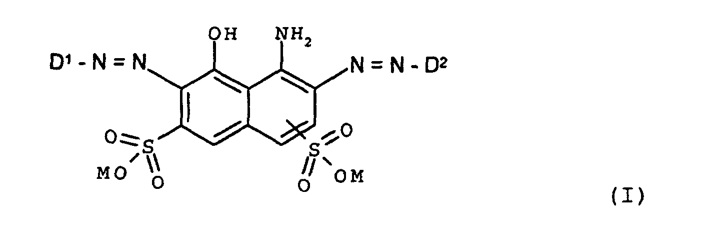 where
D¹ and D² each represent a group of the general formula II 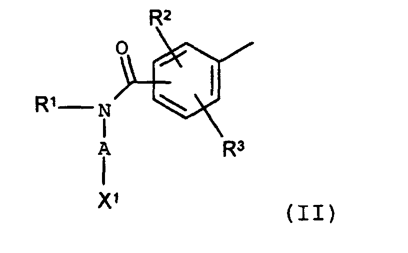 where
R¹ is hydrogen, (C₁-C₄)-alkyl, aryl or substituted aryl; and
R² and R³ are independently hydrogen, (C₁-C₄)-alkyl, (C₁-C₄)-alkoxy, hydroxyl, sulfo, carboxyl, amido or halogen;
A is a phenylene group of the general formula III 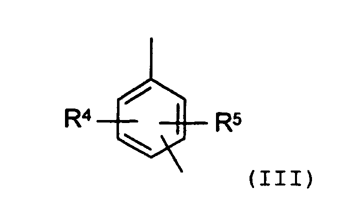 where
R⁴ and R⁵ are independently hydrogen, (C₁-C₄)-alkyl, (C₁-C₄)-alkoxy, hydroxyl, sulfo, carboxyl, amido or halogen;
a naphthylene group of the general formula IV 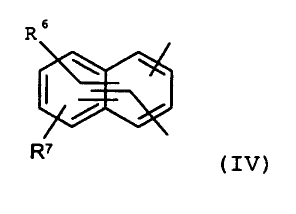 where
R⁶ and R⁷ are independently hydrogen, (C₁-C₄)-alkyl,
(C₁-C₄)-alkoxy, hydroxyl, sulfo, carboxyl, amido or halogen;
or a polymethylene group of the general formula V
-(CR⁸R⁹)ₖ- (V)
where
k is an integer greater than 1; and
R⁸ and R⁹ are independently hydrogen, (C₁-C₄)-alkyl, (C₁-C₄)-alkoxy, hydroxyl, cyano, amido, halogen or aryl; and
X¹ is hydrogen or -SO₂-Z; or
represent a phenyl radical of the general formula VI 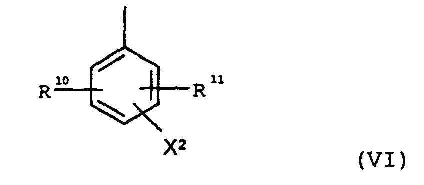 where
R¹⁰ and R¹¹ are independently hydrogen, (C₁-C₄)-alkyl, (C₁-C₄)-alkoxy, hydroxyl, sulfo, carboxyl, amido or halogen; and
X² has one of the meanings of X¹ ; or
represent a naphthyl radical of the general formula VII 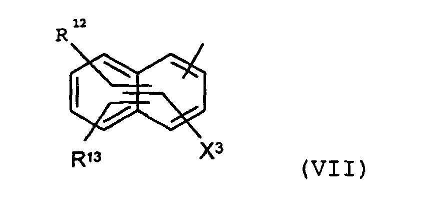 where
R¹² and R¹³ are independently hydrogen, (C₁-C₄)-alkyl, (C₁-C₄)-alkoxy, hydroxyl, sulfo, carboxyl, amido or halogen;
X³ has one of the meanings of X¹;
Z is -CH=CH₂, -CH₂CH₂Z¹ or hydroxyl,
where
Z¹ is hydroxyl or an alkali-detachable group; and M is hydrogen or an alkali metal;
where at least one of D¹ and D² is a group of the general formula II;
where, if A is a group of the general formula V, R¹ is aryl or substituted aryl;
and
where the reactive dye of the general formula I contains at least one -SO₂-Z group.

2. A reactive dye as claimed in claim 1, wherein R¹ to R⁵ and R⁸ to R¹¹ are each hydrogen and R⁶, R⁷, R¹² and R ¹³ are each hydrogen or sulfo.

3. A reactive dye as claimed in claim 1 and/or 2,
wherein Z is vinyl, β-chloroethyl or β-sulfatoethyl.

4. A reactive dye as claimed in one or more of claims 1 to 3, conforming to the general formula Ia 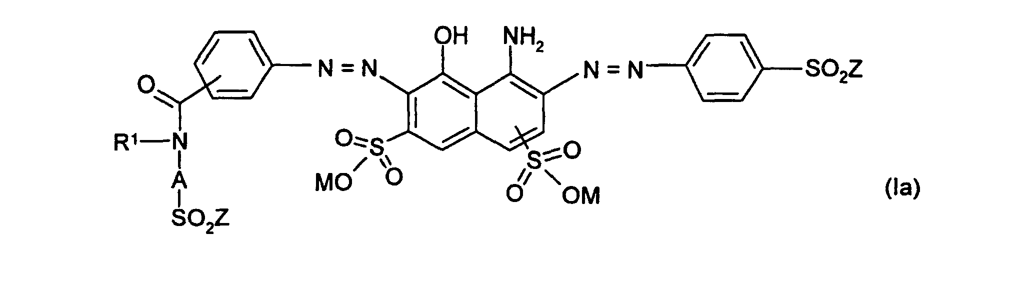 where A, Z and R¹ are each as defined in claim 1.

5. A reactive dye as claimed in claim 4, wherein A is phenylene and Z is vinyl or β-sulfatoethyl.

6. A process for preparing a reactive dye as claimed in one or more of claims 1 to 5, which comprises diazotizing an amine of the general formula VIII
D² - NH₂ (VIII)
where D² is as defined in claim 1, in a
conventional manner, then reacting the resulting diazonium compound in an aqueous medium with 1-amino-8-hydroxy-3,6-disulfonic acid (H-acid) or 1-amino-8-hydroxy-4,6-disulfonic acid (K-acid) to form the monoazo dye of the general formula IX 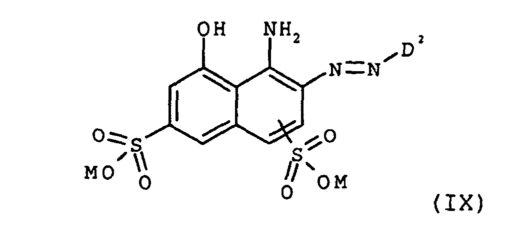 and subsequently diazotizing an amine of the general formula X
D¹ - NH₂ (X)
where D¹ is as defined in claim 1, in a conventional manner and then coupling the resulting diazonium compound with the monoazo dye of the general formula IX to form the disazo dye of the general formula I.

7. Use of a reactive dye of the general formula I as set forth in one or more of claims 1 to 5 for dyeing hydroxyl- and/or carboxamido-containing fiber material.

## Revendications

1. Colorant réactif de la formule générale I 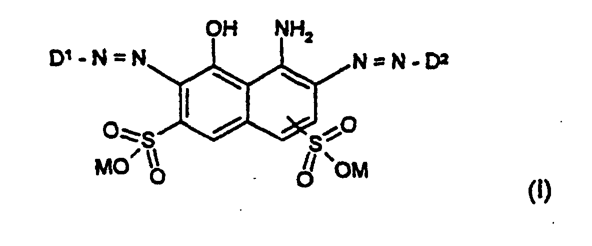 dans laquelle
D¹ et D² représentent un groupe de la formule générale II 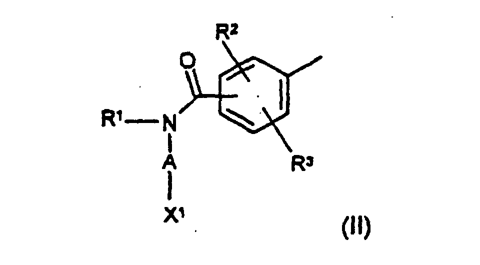 dans laquelle
R¹ représente de l'hydrogène, un radical alkyle en C₁ à C₄, aryle ou aryle substitué, et
R² et R³ représentent indépendamment l'un de l'autre de l'hydrogène, un radical alkyle en C₁ à C₄, alcoxy en C₁ à C₄, hydroxy, sulfo, carboxy, amido ou un halogène,
A a la signification d'un groupe phénylène de la formule générale III 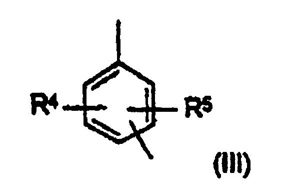 dans laquelle
R⁴ et R⁵ représentent indépendamment l'un de l'autre de l'hydrogène, un radical alkyle en C₁ à C_{4,} alcoxy en C₁ à C₄, hydroxy, sulfo, carboxy, amido ou un halogène,
un groupe naphtylène de la formule générale IV 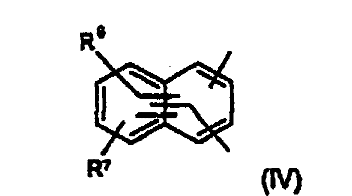 dans laquelle
R⁶ et R⁷ représentent indépendamment l'un de l'autre de l'hydrogène, un radical alkyle en C₁ à C₄, alcoxy en C₁ à C₄, hydroxy, sulfo, carboxy, amido ou un halogène,
ou un groupe polyméthylène de la formule générale V
-(CR⁸R⁹)ₖ- (V)
dans laquelle
k est un nombre entier plus grand que 1, et
R⁸ et R⁹ représentent indépendamment l'un de l'autre de l'hydrogène, un radical alkyle en C₁ à C₄, alcoxy en C₁ à C₄, hydroxy, cyano, amido ou un halogène ou un radical aryle, et
X¹ représente de l'hydrogène ou -SO₂-Z, ou bien un reste phénylène de la formule générale VI 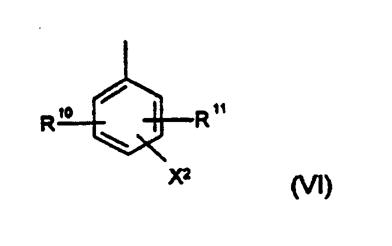 dans laquelle
R¹⁰ et R¹¹ représentent indépendamment l'un de l'autre de l'hydrogène, un radical alkyle en C₁ à C₄, alcoxy en C₁ à C₄, hydroxy, sulfo, carboxy, amido ou un halogène, et
X² a l'une des significations de X¹, ou bien un reste naphtyle de la formule générale VII 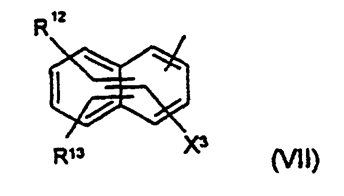 dans laquelle
R¹² et R¹³ représentent indépendamment l'un de l'autre de l'hydrogène, un radical alkyle en C₁ à C₄, alcoxy en C₁ à C₄, hydroxy, sulfo, carboxy, amido ou un halogène,
X³ a l'une des significations de X¹,
Z signifie -CH=CH₂, -CH₂CH₂Z¹ ou hydroxy,
où
Z¹ est un groupe hydroxy ou un groupe séparable sous l'action d'un alcali, et
M représente de l'hydrogène ou un métal alcalin,
où au moins l'un des restes D¹ et D² représente un groupe de la formule générale II,
où dans le cas où A représente un groupe de la formule générale V, R¹ est un aryle ou un aryle substitué, et
où le colorant réactif de la formule générale I contient au moins un groupe -SO₂-Z.

2. Colorant réactif selon la revendication 1, **caractérisé en ce que** les substituants R¹ à R⁵ et R⁸ à R¹¹ sont de l'hydrogène et R⁶, R⁷, R¹² et R¹³ sont de l'hydrogène ou un radical sulfo.

3. Colorant réactif selon la revendication 1 et/ou 2, **caractérisé en ce que** Z est un radical vinyle, β-chloréthyle ou β-sulfato-éthyle.

4. Colorant réactif selon une ou plusieurs des revendications 1 à 3, **caractérisé en ce qu'**il correspond à la formule générale Ia 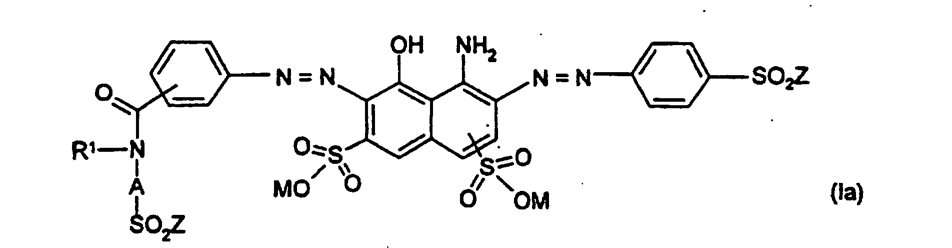 dans laquelle A, Z et R¹ sont tels que définis dans la revendication 1.

5. Colorant réactif selon la revendication 4, **caractérisé en ce que** A est un phénylène et Z un vinyle ou un β-sulfatoéthyle.

6. Procédé de préparation d'un colorant réactif selon une ou plusieurs des revendications 1 à 5, **caractérisé en ce que** l'on diazote de manière usuelle une aminé de la formule générale VIII
D² - NH₂ (VIII)
dans laquelle D² est tel que défini dans la revendication 1, on fait ensuite réagir le composé de diazonium obtenu dans un milieu aqueux avec de l'acide 1-amino-8-hydroxy-3,6-disulfonique (acide H) ou de l'acide 1-amino-8-hydroxy-4,6-disulfonique (acide K) pour obtenir un colorant monoazoïque de la formule générale IX 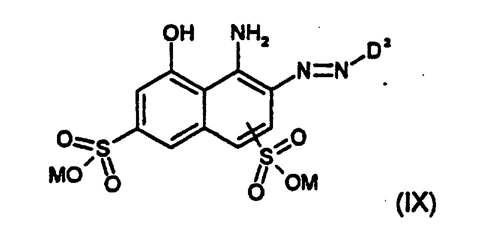 et on diazote ensuite de manière usuelle une amine de la formule générale X
D¹ - NH₂ (X)
dans laquelle D¹ est tel que défini dans la revendication 1, puis on couple avec le colorant monoazoïque de la formule générale IX pour obtenir le colorant disazoïque de la formule générale I.

7. Utilisation d'un colorant réactif de la formule générale I selon une ou plusieurs des revendications 1 à 5 pour la teinture de matières fibreuses contenant des groupes hydroxy et/ou carbonamide.
